# EUROPEAN PATENT APPLICATION

(11) **EP 4 779 976 A1**
(43) Date of publication of application: **22.07.2026**
(21) Application number: 25305064.5
(22) Date of filing: 17.01.2025
(51) Int. Cl.: H04N 19/11, H04N 19/119, H04N 19/176, H04N 19/593

(54) **MULTIPLE TRANSFORM SET SELECTION FOR SPATIAL GEOMETRIC PARTITIONING MODE**

(71) Applicant: InterDigital CE Patent Holdings, SAS, 75017 Paris (FR)
(72) Inventor: PURI, Saurabh, SAINT-LAZARE, J7T 0P6 (CA); BONNINEAU, Charles, MONTREAL, H2J 1G1 (CA); NASER, Karam, 35250 MOUAZE (FR); LE LEANNEC, Fabrice, 35830 BETTON (FR)
(74) Representative: Vossius & Partner Patentanwälte Rechtsanwälte mbB

(57) **Abstract**

Systems, methods, and instrumentalities are disclosed for multiple transform set selection (MTSS) for spatial geographic partition mode (SGPM). A device for video decoding/encoding may include a processor. The device may be configured to obtain a plurality of candidate intra prediction modes for a video block. The device may determine whether a partition direction associated with a SGPM or an intra prediction mode of the plurality of candidate intra prediction modes is to be used to obtain a first transform set associated with the video block. The device may obtain a second transform set associated with the video block based on the determination of whether the partition direction or the intra prediction mode is to be used to obtain the first transform set. The device may decode/encode the video block using the first and second transform sets.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for multiple transform set selection (MTSS) for a spatial geometric partitioning mode (SGPM). A device for video decoding may include a processor. The device may be configured to obtain a plurality of candidate intra prediction modes for a video block. The device may determine whether a partition direction associated with a SGPM or an intra prediction mode of the plurality of candidate intra prediction modes is to be used to obtain a first inverse transform set associated with the video block (e.g., based on one or more prediction differences). The device may obtain a second inverse transform set associated with the video block based on the determination of whether the partition direction or the intra prediction mode is to be used to obtain the first inverse transform set. The device may decode the video block using the first and/or second inverse transform sets.

A device for video encoding may include a processor. The device may obtain a plurality of candidate intra prediction modes for a video block. The device may determine whether a partition direction associated with a SGPM or an intra prediction mode of the plurality of candidate intra prediction modes is to be used to obtain a first transform set associated with the video block. The device may obtain a second transform set associated with the video block based on the determination of whether the partition direction or the intra prediction mode is to be used to obtain the first transform set. The device may encode the video block using the first and/or second transform sets.

In examples, one or more of the candidate intra prediction modes may be virtual intra prediction modes (e.g., each of the candidate intra prediction modes may be a virtual intra prediction mode). The plurality of candidate intra prediction modes may be obtained based on a histogram of gradients (HoG). In examples, the first intra prediction mode may be a first virtual intra prediction mode, and the second intra prediction mode may be a second virtual intra prediction mode.

The device may include one or more features. For example, the device may determine that the SGPM is enabled for the video block. The device may determine the partition direction associated with the SGPM. The device may select a first and/or second intra prediction modes from the plurality of candidate intra prediction modes. The intra prediction mode may be one of the first and/or second intra prediction modes. The device may obtain a first and/or second intra prediction mode indices associated with the SGPM (e.g., associated with the SGPM partition). The device may determine a first prediction difference based on the first intra prediction mode index and/or the first intra prediction mode of the plurality of candidate intra prediction modes. The device may determine a second prediction difference based on the second intra prediction mode index and/or the second intra prediction mode of the plurality of candidate intra prediction modes. The device may, based on determining that one of the first prediction difference and/or the second prediction difference being equal to or less than a threshold value, determine that the first intra prediction mode is to be used to obtain the first (e.g., inverse) transform set. The device may, based on determining that the first intra prediction mode is to be used to obtain the first (e.g., inverse) transform set, obtain the second (e.g., inverse) transform set using the second intra prediction mode on a condition that the second prediction difference is equal to or less than the threshold value.

The device may, based on determining that one of the first prediction difference and/or the second prediction difference being equal to or less than a threshold value, determine that the first intra prediction mode is to be used to obtain the first (e.g., inverse) transform set. The device may, based on determining that the first intra prediction mode is to be used to obtain the first (e.g., inverse) transform set, obtain the second (e.g., inverse) transform set using the partition direction on a condition that the second prediction difference is greater than the threshold value. The device may determine that the first prediction difference is greater than a threshold value. The device may determine that the second prediction difference is greater than the threshold value. The device may determine that the partition direction is to be used to obtain the first (e.g., inverse) transform set. The device may, based on the determination that the partition direction is to be used to obtain the first (e.g., inverse) transform set, obtain the second (e.g., inverse) transform set using the intra prediction mode.

The device may determine that the intra prediction mode is to be used to obtain the first (e.g., inverse) transform set. The device may, based on the determination that the intra prediction mode is to be used to obtain the first (e.g., inverse) transform set, obtain the second (e.g., inverse) transform set using the partition direction. The device may determine that a size of the video block is greater than a threshold value. The device may determine that MTSS is enabled for the video block based on determining the size of the video block being greater than the threshold value. The first and/or second (e.g., inverse) transform sets may be associated with MTSS.

The device may obtain a pool of transform sets. The device may determine that the partition direction is to be used to obtain the first (e.g., inverse) transform set. The first (e.g., inverse) transform set and/or the second (e.g., inverse) transform set may be obtained using a first and/or second transform set from the pool of transform sets.

The candidate intra prediction mode(s) may be virtual intra prediction mode(s). A virtual intra prediction mode may be obtained via a histogram of gradient (HoG).

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates examples of spatial geometric partitioning mode (SGPM) candidates.
FIG. 5 illustrates an example of a GPM candidate.
FIG. 6 illustrates an example of GPM blending.
FIG. 7 illustrates an example of SGPM operations.
FIG. 8 illustrates an example of a regression-based SGPM.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

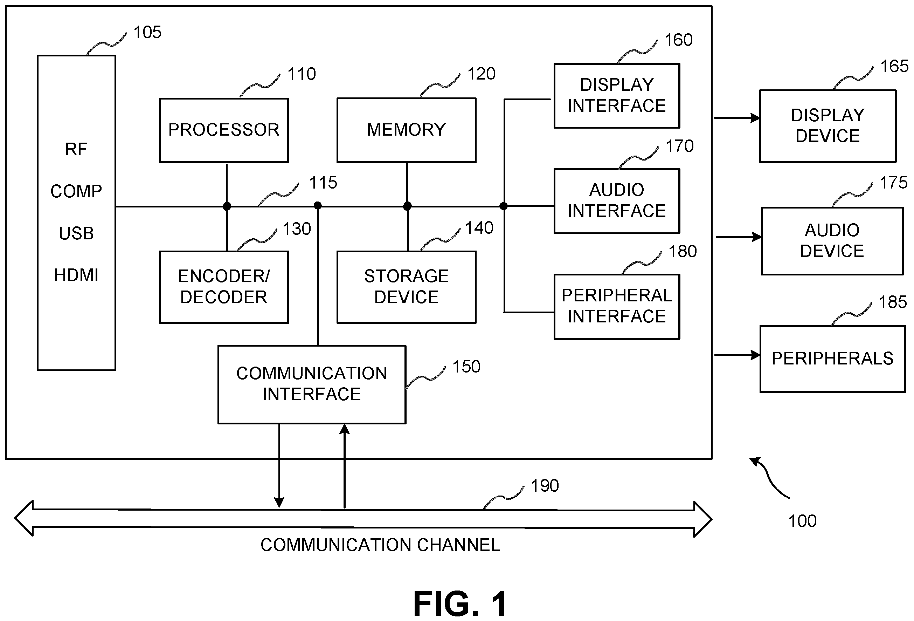

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

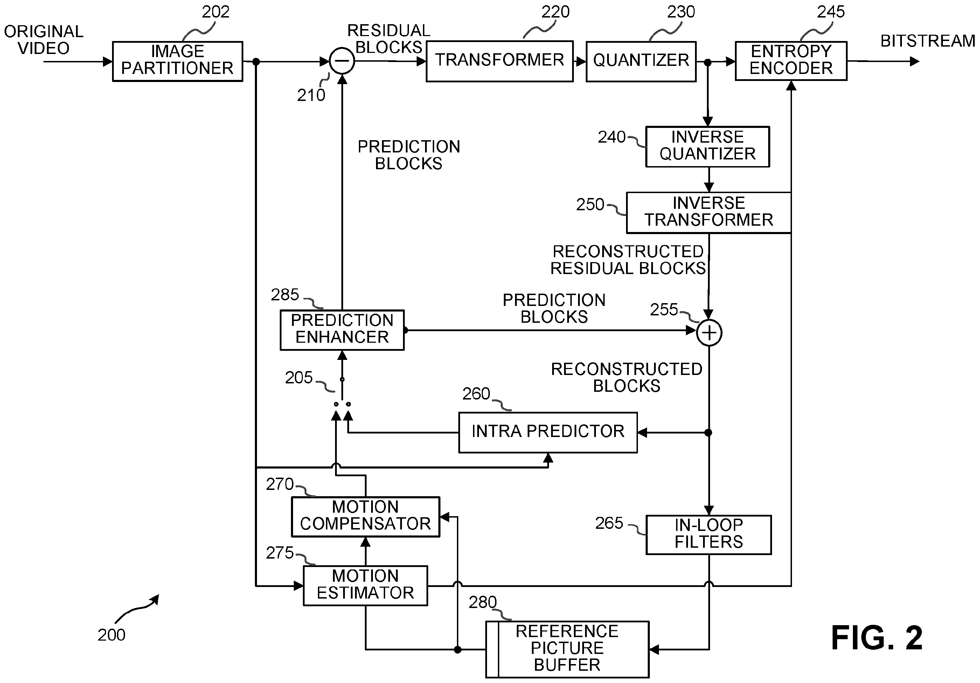

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

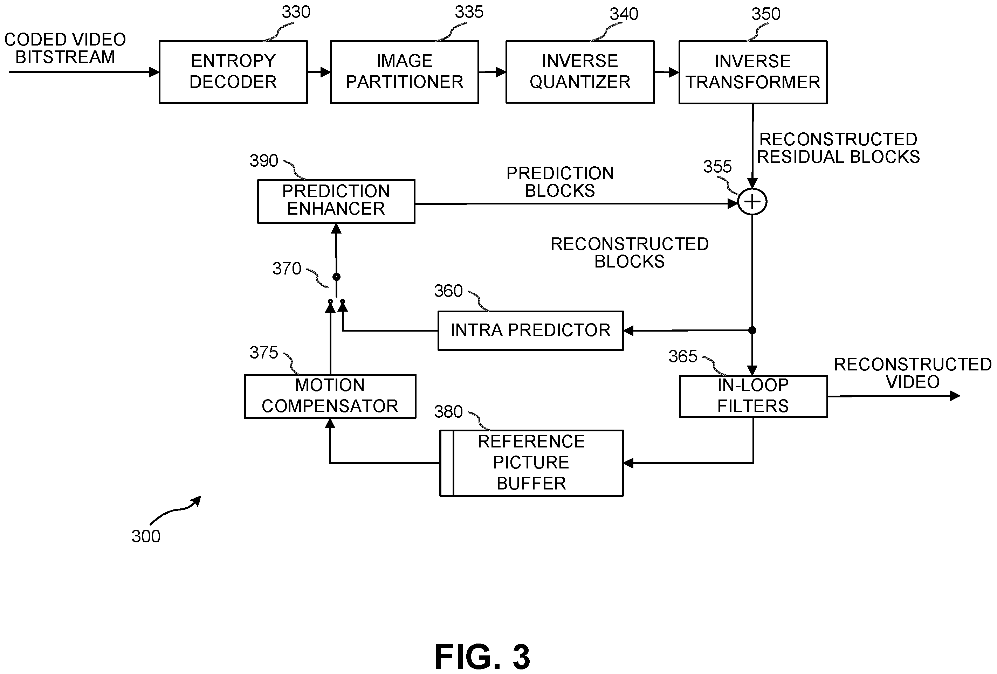

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

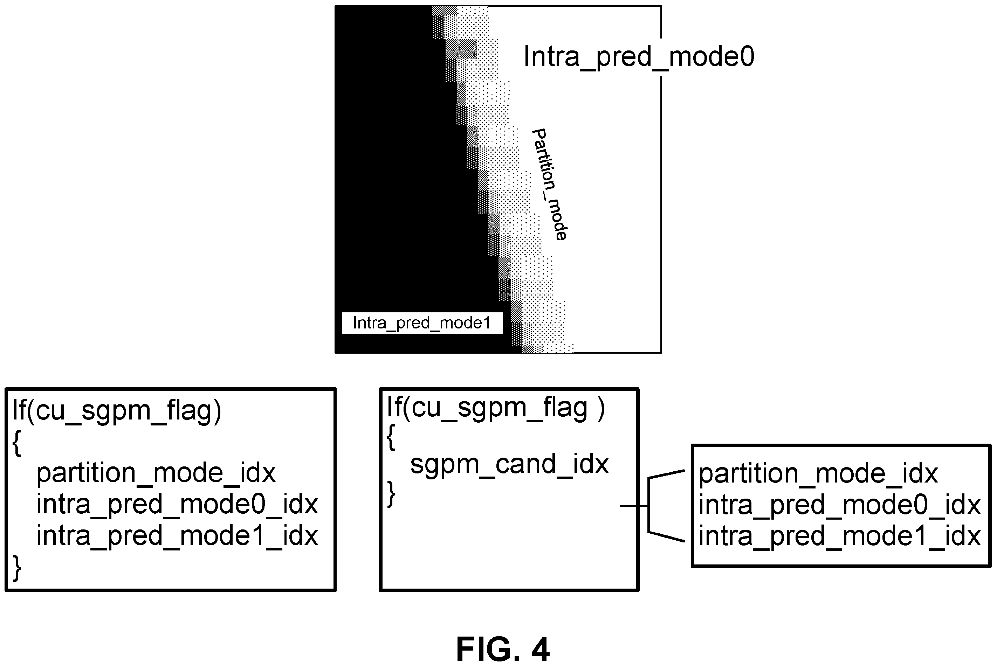

A **spatial** geometric partitioning mode (SGPM) may be used to predict a coding block. SGPM may be considered an intra mode and may resemble the inter coding tool(s) of a geometric partitioning mode (GPM). The two prediction parts may be generated from an intra predicted process. In SGPM, a candidate list may be built with each entry containing a partition split and two intra prediction modes, as illustrated in FIG. 4. One or more (e.g., 26) partition modes and one or more (e.g., three) intra prediction modes may be used to form the combinations. The length of the candidate list may be set to 16. The selected candidate index may be signaled.

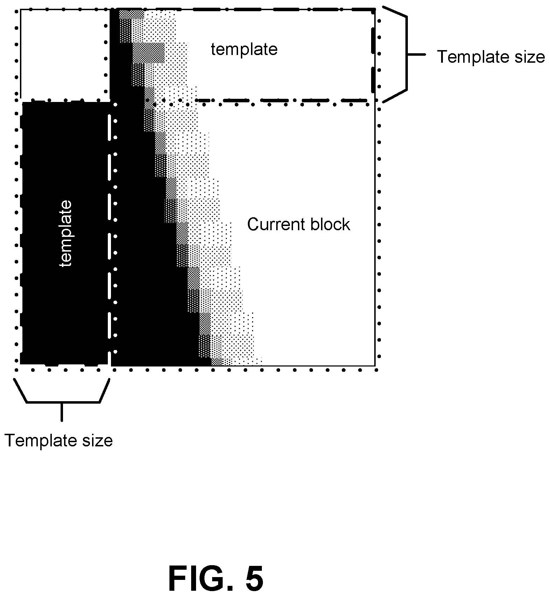

FIG. 5 illustrates an example SGPM template that may be used to reorder an SGPM candidates list. The sum of absolute difference (SAD) between the prediction and reconstruction of the template may be used for ordering the candidates. The template size may be fixed to one.

For a partition mode (e.g., each partition mode), an IPM list may be derived (e.g., including a TIMD-derived mode, horizontal mode, and vertical mode). The IPM list size may be set to three. In the list, a TIMD-derived mode may be replaced by one or more (e.g., two) derived modes with horizontal and vertical orientations.

The SGPM mode may be applied with a restricted block size (e.g., 4 ≤ *width* ≤ 64 and 4 ≤ *height* ≤ 64, where *width < height* * 8, *height* < *width* * 8, and *width* * *height* ≥ 32.

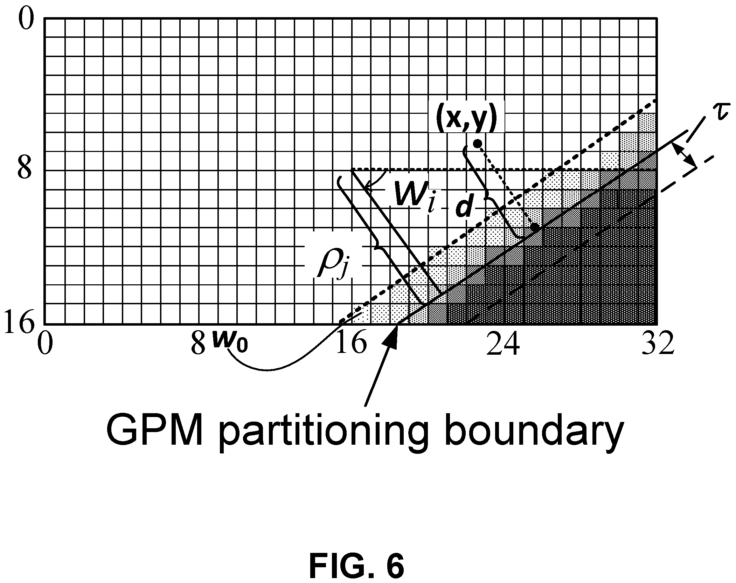

A PPS (picture parameter set) flag may be coded to indicate whether no blending of two intra predictions is allowed. If this PPS flag is set to false, the following adaptive blending may be used for spatial GPM, where blending depth τ shown in FIG. 6 may be derived as follows:
If min(width, height)==4, 1/2 τ may be selected
else if min(width, height)==8, τ may be selected
else if min(width, height)==16, 2 τ may be selected
else if min(width, height)==32, 4 τ may be selected
else, 8 τ may be selected.

If the PPS flag is set to true, 1/4 τ may be used for spatial GPM coded blocks such that no blending may be used if an SGPM block has a partition angle completely horizontal or vertical, and/or if a much narrower blending width is used when the SGPM block has other partition angles. The PPS flag may be set to true for screen content coding.

Extending the geometric prediction by combining block-vector based prediction and/or (e.g., regular) intra prediction from intra-block copy geometric partitioning mode (IBC-GPM) to SGPM may be described herein. SGPM mode may test block vectors of neighboring CU's in addition to regular prediction modes. In examples, SGPM may test block vectors of neighboring CU's by at least one of: obtaining a block vector(s) of a (e.g., all) merge candidate(s), selecting a (e.g., the best) block vector according to a sum of absolute transformed difference (SATD) template cost, or testing a block vector (e.g., up to six (e.g., of the best) block vectors) inside an SGPM candidate list (e.g., construction).

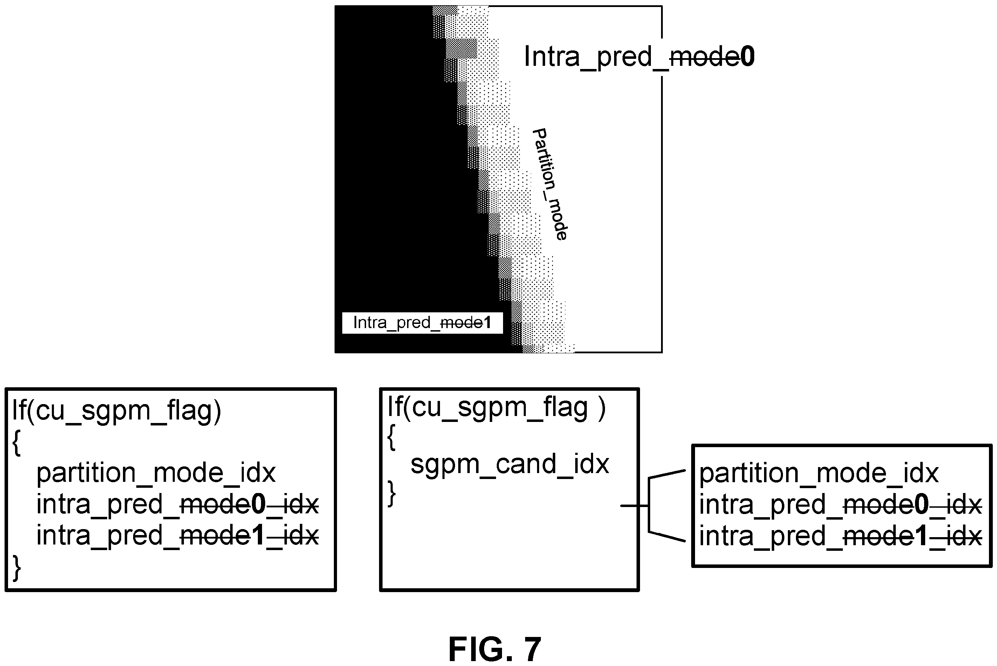

FIG. 7 illustrates an example of generalizing intra predictors. With reference to FIG. 7, identifiers intra_pred_0 and intra_pred_1 may be a regular prediction or block-vector based prediction obtained from a neighboring intraTMP and/or intra block copy (IBC) information.

Decoder side intra mode derivation (DIMD) may be described herein. As part of DIMD, the reconstructed pixels surrounding a (e.g., given) block to be predicted may carry information to infer the texture directionality in this block (e.g., the intra prediction modes that (e.g., most likely) generate the predictions with the highest qualities).

In examples, gradients may be extracted from a context of reconstructed pixels around a block. The gradients may be used to fill a histogram of gradients (HoG). The intra prediction modes (IPMs) that may provide predictions (e.g., that most likely give the predictions with highest qualities) are derived from the HoG. DIMD may derive one or more (e.g., up to five) intra modes from the reconstructed neighboring samples. The (e.g., five) predictors may be combined with the planar mode predictor (e.g., with the weights derived from the HoG).

Prediction fusion may be applied as a weighted average of the one or more (e.g., six) predictors. The weight of a planar may be fixed (e.g., to 21/64 and/or approximately 1/3). The remaining weight (e.g., of 43/64 and/or approximately 2/3) may be shared among the (e.g., five) HoG IPMs (e.g., proportionally to the amplitude of their HoG bars).

Derived intra modes may be included into the (e.g., primary) list of intra most probable modes (MPM), (e.g., so the DIMD process may be performed before the MPM list is constructed). The (e.g., primary) derived intra mode of a DIMD block may be stored with a block and/or may be used for MPM list construction of the neighboring blocks.

DIMD with block-vector (BV) based prediction may be described herein.

DIMD with BV based prediction may adaptively select between a planar and BV based prediction obtained from intra template matching (IntraTMP) or IBC mode of neighboring blocks for the blending with the angular intra prediction(s). In examples, the block vectors of a (e.g., all) merge candidate(s) may be collected. The SATD template cost may be used to select between a block-vector based prediction and a planar prediction. The (e.g., same) blending process (e.g., blending weights) of DIMD may be used. A DIMD-like process for virtual intra prediction mode (VIPM) computation may be described herein.

DIMD may be used to derive a VIPM. DIMD may be modified. For example, a (e.g., the highest) bin with an (e.g., the maximum) amplitude from a computed HoG may be output as the VIPM.

Multiple transform set selection (MTSS) for a low frequency non-separable transform (LFNST) and/or a non-separable secondary transform (NSPT) may be described herein.

The LFNST/NSPT transform set may be (e.g., implicitly) decided by an intra prediction mode (IPM). For a block coded with PLANAR, DC or directional modes, the IPM may be set as the intra prediction mode (e.g., itself). For a DIMD coded block, the IPM may be set as the optimal (e.g., best) mode derived by the DIMD process with neighboring reconstructed pixels. For a TIMD coded block, the IPM may be set as the optimal (e.g., best) mode derived by the TIMD process. For a matrix intra prediction (MIP) or intra template matching prediction (ITMP) coded block(s), the IPM may be set as the optimal (e.g., best) mode derived by the DIMD process with the prediction. For an SGPM coded block, the IPM may be set as the mode corresponding to the split mode of SGPM.

The prediction strategies of DIMD, TIMD, SGPM, MIP and/or ITMP may be different from normal intra prediction modes like PLANAR, DC and/or directional modes. For example, DIMD, TIMD, SGPM and/or ITMP may allow for one or more prediction combination(s). For example, MIP may provide the prediction using a matrix calculation. ITMP may reference the reconstructed region in the current picture. The prediction residual may illustrate a feature (e.g., a different feature) from the derived IPM.

MTSS may allow CUs coded with DIMD, TIMD, MIP, SGPM and/or ITMP to select a (e.g., one) LFNST/NSPT transform set out of at least two candidate sets. If a block (e.g., the current block) is coded with DIMD, TIMD, MIP, SGPM, and/or ITMP, and LFNST/NSPT is used, a (e.g., one more) bin may be used (e.g., employed) to indicate if/whether a first or second (e.g., the 1st or the 2nd) candidate transform set is selected. A first (e.g., the 1st) candidate transform set may remain (e.g., the same). A second (e.g., the 2nd) candidate may be derived by the DIMD process with neighboring reconstructed pixels. In examples, if a TIMD coded block applies fusion, a second (e.g., the 2nd) TIMD IPM may be (e.g., first) considered to derive the second (e.g., 2nd) candidate set. For an SGPM coded block, the second IPM that SGPM uses may be (e.g., first) considered to derive the second (e.g., 2nd) candidate set. A difference between the first and second IPM (e.g., the 1st and 2nd IPM) may be larger than 4 (e.g., to keep the diversity).

MTSS for intra LFNST/NSPT with subsampled DIMD for transform set selection may be described herein.

MTSS for intra LFNST/NSPT may be described herein. A secondary IPM for selection of LFNST/NSPT transform kernels for MIP, EIP, SGPM and/or IntraTMP modes may be derived from a (e.g., second highest) HoG on the prediction block or neighboring blocks. A prediction or neighboring blocks may be subsampled for derivation of an intra mode for transform selection. Restriction(s) on the block size and/or a number of transform candidates in the second set may be included (e.g., imposed).

One or more derivation operations for transform set(s) are described with reference to Table 1.

**Table 1: Example Derivation Operation(s) for Transform Set(s)**

| | IPM to derive the first transform set | IPM to derive the second transform set |
|---|---|---|
| DIMD, OBIC, TIMD | The first IPM used in current mode | The second IPM used in the current mode |
| SGPM, MIP, EIP, ITMP | The first IPM derived by HoG of prediction | The second IPM derived by HoG of prediction |

In examples, the first and/or second (e.g., 1st and/or 2nd) candidate may include different transform sets and/or different transpose type(s). If the second (e.g., 2nd) candidate is not (e.g., yet) decided by the operations described herein, the second candidate may be derived by the HoG of neighboring reconstructed pixels.

MTSS may be applied to CUs with a number of pixels equal to or larger than 128. For CUs less than 256 pixels, the first and/or second(ary) set candidate may be used. For larger CUs, at least three candidates may be used (e.g., all 3 candidates may be used).

Improved LFNST/NSPT kernel set selection for SGPM may be described herein.

SGPM may use the split direction (e.g., partition direction) to determine the LFNST transform kernel set for coding of the predicted residual signal. In a regression-based SGPM, DIMD may be performed on the predicted residual signal to determine the LFNST transform kernel set.

DIMD may be applied to the predicted samples of the current block for one or more modes (e.g., some other modes such as MIP, EIP, and/or the like) to derive a VIPM (e.g., which may be used to determine the LFNST/NSPT kernel set).

A VIPM may be computed on the prediction signal of the SGPM and/or may be conditionally used to determine the LFNST/NSPT transform kernel set.

The computed at least two optimal (e.g., best) VIPMs may be compared with the (e.g., true) intra modes in SGPM using a threshold. If the value of the VIPM(s) is close to at least one of the intra modes in SGPM, the VIPM(s) may be used. Otherwise, the direction of the partitioning mode may be used to derive the LFNST/NSPT kernel set.

For the blocks predicted using regular SGPM mode, the split direction (e.g., or partition mode) may be used to derive the transform set used for coding of the residual block. A look-up table (LUT) may be used to map the split direction to the intra prediction mode. Intra prediction mode may be used to derive the transform set using a second (e.g., another) LUT.

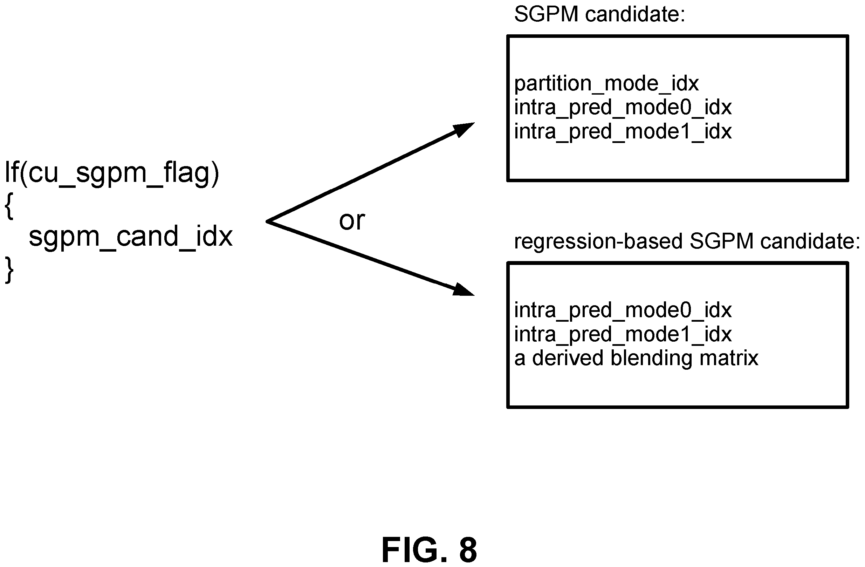

FIG. 8 is an example of testing a regression-based SGPM candidate. Regression-based SGPM blending may be described herein, where the two intra predictors may be blended using a blending matrix. The blending matrix may be computed on a template (e.g., a one line template). The regression-based SGPM candidates may be tested in competition with the regular SGPM candidates (e.g., as illustrated in FIG. 8). For regression-based SGPM, the DIMD mode may be used to select the transform set (e.g., since the blending may not be performed using the partition mode (e.g., or split direction)).

For regular SGPM, the split direction may be used to select the transform set, examples described herein may use the DIMD mode to select the transform set for a (e.g., both) SGPM model(s) (e.g., regular SGPM models) and/or a regression-based SGPM mode(s) (e.g., to provide a consistent design).

VIPMs may be computed on the prediction signal of the SGPM and/or may be conditionally used to determine the LFNST/NSPT transform kernel set. The computed at least two optimal (e.g., best) VIPMs may be compared with the (e.g., true) intra modes in SGPM using a threshold. If the value of the VIPMs is close to at least one of the intra modes in SGPM, the VIPM may be used (e.g., if the value of the VIPM(s) satisfies the threshold, then the VIPM(s) may be used). Otherwise, the direction of the partitioning mode may be used to derive the LFNST/NSPT kernel set.

In MTSS, a second (e.g., an alternative) transform set may be tested (e.g., in addition to a first (e.g., the initial one)) for modes using (e.g., relying on) VIPMs for LFNST/NSPT. For SGPM, the MTSS process may use at least two optimal (e.g., best) VIPMs to select a first and/or a second (e.g., the initial and/or an alternative) transform set.

Examples described herein may apply the MTSS for SGPM blocks in a conditional manner to improve coding efficiency.

A threshold-based condition for MTSS in SGPM may be described herein.

In examples, a threshold-based condition for MTSS in SGPM may combine the conditional use of VIPMs (e.g., to select the transform set in SGPM) with the MTSS for SGPM blocks (e.g., the first VIPM of the HoG may be conditionally used to derive the first transform set, and/or the second VIPM of the HoG may be conditionally used to derive the second transform set).

In some examples, if/when MTSS is enabled for SGPM blocks, a first and/or second (e.g., the 1st and 2nd) VIPM(s) of the HoG may be used to derive the first and/or the second transform set (e.g., as described in Table 1).

In examples, the VIPM(s) and/or a split direction may be used (e.g., conditionally) to derive the first (e.g., initial) transform set. In examples, at least two (e.g., of the best) VIPM(s) may be compared with the (e.g., two true) intra modes of SGPM, and/or the at least two VIPM(s) may be used if/when at least one of the (e.g., two) VIPM(s) is close to the (e.g., true) intra mode(s) of SGPM (e.g., a device may determine to use two VIPMs based on a comparison of a VIPM to a threshold). In examples, a device may determine whether a partition direction associated with a SGPM or an intra prediction mode of the plurality of candidate intra prediction modes is to be used to obtain a first inverse transform set associated with the video block.

A second inverse transform set may be obtained based on how a first inverse transform set is obtained. In examples, the second (e.g., alternate) transform set may be selected based on how the first (e.g., initial) transform set is derived (e.g., based on whether the first transform set is derived via intra prediction mode(s) (e.g., VIPM(s)) and/or via a split direction). In examples, the device may obtain a second inverse transform set associated with the video block based on the determination of whether the partition direction or the intra prediction mode is to be used to obtain the first inverse transform set. If the first transform set is derived from the split direction, the second transform set may be derived using the optimal (e.g., best) VIPM mode (e.g., using a VIPM from at least two VIPMs). If the first transform set is derived using a VIPM, then the second transform set may use the second VIPM (e.g., based on a determination that the VIPM (e.g., still) meets the threshold-based condition(s)).

In examples, if the condition(s) are not met, split direction may be used for the derivation of the second transform set. In examples, (e.g., based on determining that one of a first prediction difference and/or a second prediction difference is equal to or less than a threshold value), a device may determine that the first intra prediction mode may be used to obtain the first inverse transform set. In examples, (e.g., based on determining that the first intra prediction mode is to be used to obtain the first inverse transform set) a device may obtain the second inverse transform set using the second intra prediction mode on a condition that the second prediction difference is equal to or less than the threshold value.

In examples, if/when VIPM is used for initial transform set selection, the split direction may be used for the second transform set selection. For example, a device may determine that the intra prediction mode is to be used to obtain the first inverse transform set. Based on the determination that the intra prediction mode is to be used to obtain the first inverse transform set, the device may obtain the second inverse transform set using the partition direction
If/when split direction is used for the initial transform set selection, the (e.g., best) VIPM may be used to select the second transform set selection (e.g., an optimal VIPM may be used to select the second transform set). In examples, the device may determine that the partition direction is to be used to obtain the first inverse transform set. Based on the determination that the partition direction is to be used to obtain the first inverse transform set, the device may obtain the second inverse transform set using the intra prediction mode.

In examples, the first (e.g., initial) transform set may be (e.g., always) derived using the (e.g., best) VIPM mode and/or the second (e.g., alternate) transform set may be derived using either a second VIPM (e.g., the second best VIPM) or split direction (e.g., based on the comparison with the (e.g., true) intra mode).

Multiple sets of transform sets (e.g., a pool of transform sets) may be provided for one or more intra modes, including SGPM. In examples, if the split direction is used to determine a first (e.g., initial) transform set (e.g., there is no (e.g., clear) directionality in the prediction), then the first (e.g., initial) and/or second (e.g., alternative) transform set(s) may be provided by a first (e.g., one) set of transform sets (e.g., a set that may be trained for a (e.g., dedicated) set of intra modes (e.g., special intra modes)). Otherwise, if a virtual intra mode is used as a first (e.g., initial) transform set, the first and/or second (e.g., initial and alternative) transform set(s) may (e.g., both) come from a second (e.g., an alternate set of) transform set(s) (e.g., trained for intra angular modes). In examples, the device may obtain a transform pool including multiple sets of transform set(s). The device may determine that the partition direction is to be used to obtain a first inverse transform set. The first inverse transform set and/or the second inverse transform set may be obtained using the transform pool (e.g., which may include multiple transform sets).

Block-size dependent MTSS in SGPM may be provided herein.

In examples, the gains of MTSS may be higher for larger resolution videos. MTSS may work well for larger block sizes. Examples described herein may include one or more operations of transform set selection for SGPM. For example, MTSS may be enabled for SGPM blocks larger (e.g., and/or smaller) than a pre-determined size. For example, MTSS may be applied to SGPM blocks that include more than 256 samples. In examples, a device may determine that a size of the video block is greater than a threshold value. The device may determine that MTSS is enabled for the video block based on determining the size of the video block being greater than the threshold value.

Disabling MTSS for SGPM blocks may be described herein.

MTSS may be disabled for SGPM and/or the improved transform set selection operation may be applied (e.g., at least two VIPMs are compared with an intra mode in SGPM using a threshold). The at least two VIPMs may be used to (e.g., adaptively) select one or more (e.g., different) transform sets. The MTSS process may be replaced. Disabling MTSS for SGPM blocks may achieve faster processing speeds (e.g., a speed-up) as MTSS may be more computationally demanding (e.g., compared to disabling MTSS for SGPM blocks).

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for video decoding, comprising:
a processor configured to:
obtain a plurality of candidate intra prediction modes for a video block;
determine whether a partition direction associated with a spatial geometric partition mode (SGPM) or an intra prediction mode of the plurality of candidate intra prediction modes is to be used to obtain a first inverse transform set associated with the video block;
obtain a second inverse transform set associated with the video block based on the determination of whether the partition direction or the intra prediction mode is to be used to obtain the first inverse transform set; and
decode the video block using the first and second inverse transform sets.

2. The device of claim 1, wherein the plurality of candidate intra prediction modes is a plurality of virtual intra prediction modes obtained based on a histogram of gradients (HoG), and the processor is further configured to:
determine that the SGPM is enabled for the video block;
determine the partition direction associated with the SGPM; and
select a first and second virtual intra prediction modes from the plurality of candidate intra prediction modes, wherein the intra prediction mode is one of the first and second virtual intra prediction modes;
obtain a first and second intra prediction mode indices associated with the SGPM partition direction;
determine a first prediction difference based on the first intra prediction mode index and the first virtual intra prediction mode of the plurality of candidate intra prediction modes; and
determine a second prediction difference based on the second intra prediction mode index and the second virtual intra prediction mode of the plurality of candidate intra prediction modes.

3. The device of claim 2, wherein the processor is further configured to:
based on determining that one of the first prediction difference and the second prediction difference being equal to or less than a threshold value,
determine that the first virtual intra prediction mode is to be used to obtain the first inverse transform set; and
based on determining that the first virtual intra prediction mode is to be used to obtain the first inverse transform set, obtain the second inverse transform set using the second virtual intra prediction mode on a condition that the second prediction difference is equal to or less than the threshold value.

4. The device of claim 2, wherein the processor is further configured to:
based on determining that one of the first prediction difference and the second prediction difference being equal to or less than a threshold value,
determine that the first virtual intra prediction mode is to be used to obtain the first inverse transform set; and
based on determining that the first virtual intra prediction mode is to be used to obtain the first inverse transform set, obtain the second inverse transform set using the partition direction on a condition that the second prediction difference is greater than the threshold value.

5. The device of claim 2, wherein the processor is further configured to:
determine that the first prediction difference is greater than a threshold value; and
determine that the second prediction difference is greater than the threshold value.

6. The device of claim 1 or claim 5, wherein the processor is further configured to:
determine that the partition direction is to be used to obtain the first inverse transform set; and
based on the determination that the partition direction is to be used to obtain the first inverse transform set, obtain the second inverse transform set using the intra prediction mode.

7. The device of claim 1, wherein the processor is further configured to:
determine that the intra prediction mode is to be used to obtain the first inverse transform set; and
based on the determination that the intra prediction mode is to be used to obtain the first inverse transform set, obtain the second inverse transform set using the partition direction.

8. The device of claim 1, wherein the processor is further configured to:
determine that a size of the video block is greater than a threshold value; and
determine that multiple transform set selection (MTSS) is enabled for the video block based on determining the size of the video block being greater than the threshold value, wherein the first and second inverse transform sets are associated with MTSS.

9. The device of claim 1, wherein the processor is further configured to:
obtain a pool of transform sets; and
determine that the partition direction is to be used to obtain the first inverse transform set, wherein the first inverse transform set is obtained via a first transform set from the pool of transform sets and the second inverse transform set is obtained via a second transform set from the pool of transform sets.

10. A device for video encoding, comprising:
a processor configured to:
obtain a plurality of candidate intra prediction modes for a video block;
determine whether a partition direction associated with a spatial geometric partition mode (SGPM) or an intra prediction mode of the plurality of candidate intra prediction modes is to be used to obtain a first transform set associated with the video block;
obtain a second transform set associated with the video block based on the determination of whether the partition direction or the intra prediction mode is to be used to obtain the first transform set; and
encode the video block using the first and second transform sets.

11. The device of claim 10, wherein the plurality of candidate intra prediction modes is a plurality of virtual intra prediction modes obtained based on a histogram of gradients (HoG), and the processor is further configured to:
determine that the SGPM is enabled for the video block;
determine the partition direction associated with the SGPM; and
select a first and second virtual intra prediction modes from the plurality of candidate intra prediction modes, wherein the intra prediction mode is one of the first and second virtual intra prediction modes;
obtain a first and second SGPM intra prediction modes;
determine a first prediction difference based on the first SGPM intra prediction mode and the first virtual intra prediction mode of the plurality of candidate intra prediction modes; and
determine a second prediction difference based on the second SGPM intra prediction mode and the second virtual intra prediction mode of the plurality of candidate intra prediction modes, wherein the determination of whether the partition direction or the intra prediction mode is to be used to obtain the first transform set is based on the first and second prediction differences.

12. A method for video decoding, comprising:
obtaining a plurality of candidate intra prediction modes for a video block;
determining whether a partition direction associated with a spatial geometric partition mode (SGPM) or an intra prediction mode of the plurality of candidate intra prediction modes is to be used to obtain a first inverse transform set associated with the video block;
obtaining a second inverse transform set associated with the video block based on the determination of whether the partition direction or the intra prediction mode is to be used to obtain the first inverse transform set; and
decoding the video block using the first and second inverse transform sets.

13. The method of claim 12, wherein the plurality of candidate intra prediction modes is a plurality of virtual intra prediction modes obtained based on a histogram of gradients (HoG), and the method further comprises:
determining that the SGPM is enabled for the video block;
determining the partition direction associated with the SGPM; and
selecting a first and second virtual intra prediction modes from the plurality of candidate intra prediction modes, wherein the intra prediction mode is one of the first and second virtual intra prediction modes;
obtaining a first and second intra prediction mode indices associated with the SGPM partition direction;
determining a first prediction difference based on the first intra prediction mode index and the first virtual intra prediction mode of the plurality of candidate intra prediction modes; and
determining a second prediction difference based on the second intra prediction mode index and the second virtual intra prediction mode of the plurality of candidate intra prediction modes, wherein the determination of whether the partition direction or the intra prediction mode is to be used to obtain the first transform set is based on the first and second prediction differences.

14. A method for video encoding, comprising:
obtaining a plurality of candidate intra prediction modes for a video block;
determining whether a partition direction associated with a spatial geometric partition mode (SGPM) or an intra prediction mode of the plurality of candidate intra prediction modes is to be used to obtain a first transform set associated with the video block;
obtaining a second transform set associated with the video block based on the determination of whether the partition direction or the intra prediction mode is to be used to obtain the first transform set; and
encoding the video block using the first and second transform sets.

15. The method of claim 14, wherein the plurality of candidate intra prediction modes is a plurality of virtual intra prediction modes obtained based on a histogram of gradients (HoG), and the method further comprises:
determining that the SGPM is enabled for the video block;
determining the partition direction associated with the SGPM; and
selecting a first and second virtual intra prediction modes from the plurality of candidate intra prediction modes, wherein the intra prediction mode is one of the first and second virtual intra prediction modes;
obtaining a first and second SGPM intra prediction modes;
determining a first prediction difference based on the first SGPM intra prediction mode and the first virtual intra prediction mode of the plurality of candidate intra prediction modes; and
determining a second prediction difference based on the second SGPM intra prediction mode and the second virtual intra prediction mode of the plurality of candidate intra prediction modes, wherein the determination of whether the partition direction or the intra prediction mode is to be used to obtain the first transform set is based on the first and second prediction differences.
